# EUROPEAN PATENT SPECIFICATION

(11) **EP 4 017 670 B1**
(45) Date of publication and mention of the grant of the patent: **06.08.2025**
(21) Application number: 20767969.7
(22) Date of filing: 20.08.2020
(51) Int. Cl.: B23K 9/24, B23K 10/00, H05H 1/34

(54) **TORCH FOR ARC WELDING OR CUTTING AND METHOD USING SAID TORCH**
BRENNER ZUM LICHTBOGENSCHWEISSEN ODER SCHNEIDEN UND VERFAHREN MIT DIESEM BRENNER
CHALUMEAU DE SOUDAGE OU DE DÉCOUPE À L'ARC ET SON PROCÉDÉ D'UTILISATION

(30) Priority: 22.08.2019 EP 19020485
(43) Date of publication of application: 29.06.2022
(73) Proprietor: Linde GmbH, 82049 Pullach (DE)
(72) Inventor: SIEWERT, Erwan, 85283 Niederlauterbach (DE); HUSSARY, Nakhleh, A., 85737 Ismaning (DE); WAGNER, Richard, Andreas, 80339 München (DE)
(74) Representative: Lu, Jing
(86) International application number: PCT/EP2020/025381
(87) International publication number: WO 2021/032321

(56) References cited:
- EP-A1- 1 951 007
- EP-A2- 1 203 513
- EP-A2- 1 894 450
- WO-A1-00/60653
- WO-A1-2006/001455
- US-A1- 2017 303 381

## Description

The invention relates to a torch for plasma processing (welding, cutting, spraying, etc.). Since the electric arc requires electric energy to be conducted from the energy source towards the electrode, which is positioned in the center of the torch, different components of the torch such as the torch body and the electrode or the torch body and the plasma nozzle need to be connected to each other in an electrically conductive manner while other components need to be electrically isolated from each other in order to prevent short circuits. Conventionally, electrically conductive connections are realized by metal-on-metal contacts.

In such torches different working fluids are used simultaneously, e.g. cooling water or air, inert shielding gases and/or active shielding gases. Therefore, it is necessary to connect different components of the torch in a sealing manner, so that the different fluids cannot mix with or contaminate each other but remain in their respective passageways. Usually such sealing functions are realized through the use of a deformable member such as an O-ring or a gasket.

For maintenance purposes, the torch needs to be disassembled and reassembled regularly, so that the sealing members need to be replaceable. Typical metal sealing components such as copper washers or gaskets can hardly be used due to the need of specialized tools to ensure proper sealing functionality.

The present invention realizes the sealing and electrically conductive connection by using at least one elastically deformable and electrically conductive sealing member. This has the advantage that both functionalities are provided by the same component, offering more freedom of design and the potential to minimize the overall sizing of the torch which is desirable for robotic and manual applications (in welding, cutting, spraying, etc.). A further advantage is that tolerances for fittings can be larger, since the electrically conductive connection does not rely on metal-on-metal contact but is effected by the electrically conductive and elastically deformable sealing member, ensuring electrical conductivity over a wider range of distances. As a consequence, the electrical contact can also occur on a radial surface and therefore no hitting surface, that is in traditionally designed torches the end face surface of a part, is necessary to conduct the current. This drastically reduces the effort for end machining.

Suitable materials for corresponding electrically conductive sealing members are conductive polymers, conductive rubber or non-conductive elastomers, thermoplastic elastomers, neoprene, silicone rubbers, silicone caulks, poly (vinyl chloride) or EPDM with conductive fillers and/or coatings, including but not limited to aluminum, silver, copper, nickel or other metallic material or graphite or other carbon based conductive material like carbon black, fullerenes or carbon nanotubes. The filler and/or coating material can be used in particulate, fibrous or textile form.

"Electrically conductive" material in the terminology of this application is to be understood as a material possessing an electrical resistivity in the range of 0.002 Ωcm to 20 Ωcm.

Within this application, a "sealing" functionality means that a fluid is prevented from permeating through the respective connection, to such an extent, that a contamination of 20 ppm by volume in the target fluid is not exceeded.

"Elastically deformable" material in the terminology of this application is to be understood as a material with a Young's modulus or similar nonlinear elastic properties in the range of 0,2 MPa to 2 MPa.

The current conducted by the at least one electrically conductive and elastically deformable sealing member according to the invention ranges from 1 A to 1500 A, more preferably from 1 A to 400 A, even more preferably from 1 A to 150 A, while sealing of different fluid passageways is realized with fluid pressures ranging from 0,1 MPa to 2 MPa and more preferably from 0,2 MPa to 1 MPa.

According to the invention, the electrically conductive and elastically deformable sealing member can be used on both the anode and the cathode side of the torch.

In another aspect, the electrically conductive and elastically deformable sealing member may be part of a main conduction path of the torch such as in the connection between the torch body and the plasma nozzle, which is particularly preferred, because these components need to be disassembled frequently for maintenance and replacement.

In another aspect, the electrically conductive and elastically deformable sealing member may be part of a secondary conduction path, such as the pilot circuit.

In another aspect, the electrically conductive and elastically deformable sealing member may be used on a consumable component such as an electrode, particularly a flux-cored feed wire.

Preferably, the at least one electrically conductive and elastically deformable sealing member is in the form of an O-ring. This has the advantage of an easy assembling process and cost effective production.

In one aspect, multiple electrically conductive and elastically deformable sealing members are used. They may be used to connect two components in multiple places, or to join more than two components into one common conduction path.

In one particularly preferred embodiment multiple electrically conductive and elastically deformable sealing members in the form of O-rings connect concentrically cylindrical surfaces of two components in a radial direction. This offers the particular advantage of improved sealing performance in an axial direction while enhancing electrical conductivity in the radial direction. A further advantage of such an embodiment is the retained possibility of movement of the components relative to one another in the axial direction.

In another advantageous embodiment, the electrically conductive and elastically deformable sealing member connects two components in an axial direction, so that it connects two components which have substantially identical lateral dimensions at least in the area where the connection is realized.

Generally, in order to effect a sealing connection, the size of a sealing member should substantially match the geometry of the components which are to be connected. This means, that when more than two torch components are connected with electrically conducting and elastically deformable sealing members according to the invention, it is particularly advantageous to use sealing members of different sizes and/or shapes to match the respective geometry of the connected components.

A torch according to the invention is suitable to be used in a welding process like metal inert gas welding, metal active gas welding, tungsten inert gas welding or plasma arc welding or in a plasma cutting, marking or spraying process.

In a preferred embodiment, the fact that, in a torch according to the present invention, poor electrical conductivity means that the seating of the conductive sealing member is imperfect is used to enhance operational security. Before the start of operational use of the torch, the electrical conductivity between different torch components may be measured and compared to calibrated values. If the difference between the measured and the calibrated value exceeds a set threshold, it is very likely that the sealing material failed or that the torch was assembled in an incorrect manner and should not be operated before a thorough revision. Poor electrical conductivity is thus an indicator for possible fluid leaks.

In a similar way, fluid leaks may also indicate poor electrical contact and the detection of fluid leakage can be used as an indicator for incorrect assembly and/or material failure.

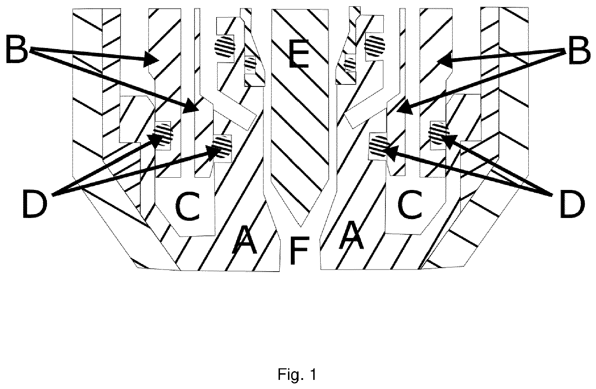

In the following, the invention is described in further detail with reference to one preferred embodiment, which is visualized schematically in Figure 1.

Figure 1 shows a schematic cross section of the front part of a torch according to an advantageous embodiment of the invention.

The torch illustrated in Figure 1 comprises an electrode E, a plasma nozzle A, and a torch body B. The nozzle constricts the plasma F generated from the working gas (active gas or inert gas) by the electric current flowing from the electrode E to the nozzle A or the work piece (not shown). The body B and the nozzle are connected by electrically conductive and elastically deformable sealing members D in the form of O-rings. In this case, the O-rings have different diameters, but exhibit the same cross section. These O-rings confine the fluid coolant to the cooling channel C and prevent it from leaking into the flow path of the working gas or plasma F while ensuring the same electric potential in the nozzle and the torch body.

## Claims

1. A torch for plasma processing, wherein the torch is suitable to be used in a process selected from the group of metal inert gas (MIG) welding, metal active gas welding (MAG), tungsten inert gas (TIG) welding, plasma arc welding and plasma cutting, marking and spraying, the torch comprising a torch body (B), a nozzle (A) and ar electrode (E) wherein at least two components of the torch are connected to each other in an electrically conducting manner,
**characterized in that**
at least two of the components are connected to each other via at least one electrically conductive and elastically deformable sealing member (D).

2. The torch according to claim 1, **characterized in that** the at least two connected components are part of the main conducting path of the torch.

3. The torch according to claim 1, **characterized in that** the at least two connected components are part of a secondary conducting path of the torch.

4. The torch according to any one of the preceding claims, **characterized in that** the sealing member (D) is an electrically conductive O-ring.

5. The torch according to any one of the preceding claims, **characterized in that** the torch comprises a plurality of electrically conductive and elastically deformable sealing members (D), whereof at least two differ from one another geometrically.

6. The torch according to any one of the preceding claims, **characterized in that** two of the at least two connected components are the torch body (B) and the nozzle (A).

7. The torch according to any one of the preceding claims, **characterized in that** the at least one electrically conductive and elastically deformable sealing member (D) comprises at least one material selected from the group consisting of conductive polymers, conductive rubber or non-conductive elastomers, thermoplastic elastomers, neoprene, silicone rubbers, silicone caulks, poly (vinyl chloride) and EPDM and is optionally coated with a layer containing aluminum, conductive fabric, silver, nickel, graphite or other conductive carbon materials or interspersed with aluminum, silver, copper, nickel, graphite, carbon or other electrically conductive particles.

8. A method of plasma processing, comprising arc welding and/or cutting and/or spraying, **characterized in that** a torch according to any one of claims 1-7 is used.

9. The method according to claim 8, **characterized in that** it comprises a step of verifying the sealing connection of the at least two connected components by measuring the electrical conductivity between the at least two connected components.

10. The method according to claim 8, **characterized in that** it comprises a step of verifying the electrically conducting connection of the at least two connected components by detecting fluid leakage.

## Patentansprüche

1. Brenner für die Plasmaverarbeitung, wobei der Brenner für die Verwendung in einem Prozess geeignet ist, der ausgewählt ist aus der Gruppe Metall-Inertgasschweißen (MIG), Metall-Aktivgasschweißen (MAG), Wolfram-Inertgasschweißen (WIG), Plasmalichtbogenschweißen sowie Plasmaschneiden, -markieren und -spritzen, wobei der Brenner einen Brennerkörper (B), eine Düse (A) und eine Elektrode (E) umfasst, wobei mindestens zwei Komponenten des Brenners elektrisch leitend miteinander verbunden sind, **dadurch gekennzeichnet, dass** mindestens zwei der Komponenten über mindestens ein elektrisch leitendes und elastisch verformbares Dichtelement (D) miteinander verbunden sind.

2. Brenner nach Anspruch 1, **dadurch gekennzeichnet, dass** die mindestens zwei verbundenen Komponenten Teil des Hauptleiterpfads des Brenners sind.

3. Brenner nach Anspruch 1, **dadurch gekennzeichnet, dass** die mindestens zwei verbundenen Komponenten Teil eines sekundären Leiterpfads des Brenners sind.

4. Brenner nach einem der vorstehenden Ansprüche,
**dadurch gekennzeichnet, dass** das Dichtungselement (D) ein elektrisch leitender O-Ring ist.

5. Brenner nach einem der vorstehenden Ansprüche,
**dadurch gekennzeichnet, dass** der Brenner eine Vielzahl von elektrisch leitenden und elastisch verformbaren Dichtelementen (D) umfasst, von denen sich mindestens zwei geometrisch voneinander unterscheiden.

6. Brenner nach einem der vorstehenden Ansprüche,
**dadurch gekennzeichnet, dass** zwei der mindestens zwei verbundenen Komponenten der Brennerkörper (B) und die Düse (A) sind.

7. Brenner nach einem der vorstehenden Ansprüche,
**dadurch gekennzeichnet, dass** das mindestens eine elektrisch leitende und elastisch verformbare Dichtelement (D) mindestens ein Material umfasst, das ausgewählt ist aus der Gruppe bestehend aus leitfähigen Polymeren, leitfähigem Gummi oder nicht leitfähigen Elastomeren, thermoplastischen Elastomeren, Neopren, Silikonkautschuken, Silikondichtmassen, Polyvinylchlorid und EPDM und optional mit einer Schicht beschichtet ist, die Aluminium, leitendes Gewebe, Silber, Nickel, Graphit oder andere leitenden Kohlenstoffmaterialien enthält oder mit Aluminium-, Silber-, Kupfer-, Nickel-, Graphit-, Kohlenstoff- oder anderen elektrisch leitenden Partikeln durchsetzt ist.

8. Verfahren zur Plasmaverarbeitung, umfassend Lichtbogenschweißen und/oder -schneiden und/oder -spritzen, **dadurch gekennzeichnet, dass** ein Brenner nach einem der Ansprüche 1 bis 7 verwendet wird.

9. Verfahren nach Anspruch 8, **dadurch gekennzeichnet, dass** dieses einen Schritt zum Überprüfen der Dichtverbindung der mindestens zwei verbundenen Komponenten durch Messen der elektrischen Leitfähigkeit zwischen den mindestens zwei verbundenen Komponenten umfasst.;

10. Verfahren nach Anspruch 8, **dadurch gekennzeichnet, dass** dieses einen Schritt zum Überprüfen der elektrisch leitenden Verbindung der mindestens zwei verbundenen Komponenten durch Erfassen eines Fluidlecks umfasst.

## Revendications

1. Torche destinée au traitement au plasma, dans laquelle la torche peut être utilisée dans un procédé choisi dans le groupe de soudage au gaz inerte métallique (MIG), soudage au gaz actif métallique (MAG), soudage au gaz inerte tungstène (TIG), soudage à l'arc au plasma et découpe, marquage et pulvérisation au plasma, la torche comprenant un corps de torche (B), une buse (A) et une électrode (E), dans laquelle au moins deux composants de la torche sont connectés l'un à l'autre par conduction électrique, **caractérisée en ce qu'**au moins deux des composants sont connectés l'un à l'autre par l'intermédiaire d'au moins un élément d'étanchéité (D) élastiquement déformable et conducteur d'électricité.

2. Torche selon la revendication 1, **caractérisée en ce que** les au moins deux composants connectés font partie du chemin conducteur principal de la torche.

3. Torche selon la revendication 1, **caractérisée en ce que** les au moins deux composants connectés font partie d'un chemin conducteur secondaire de la torche.

4. Torche selon l'une quelconque des revendications précédentes,
**caractérisée en ce que** l'élément d'étanchéité (D) est un joint torique électriquement conducteur.

5. Torche selon l'une quelconque des revendications précédentes,
**caractérisée en ce que** la torche comprend une pluralité d'éléments d'étanchéité (D) électriquement conducteurs et élastiquement déformables, dont au moins deux diffèrent l'un de l'autre sur le plan géométrique.

6. Torche selon l'une quelconque des revendications précédentes,
**caractérisée en ce que** deux des au moins deux composants connectés sont le corps de la torche (B) et la buse (A).

7. Torche selon l'une quelconque des revendications précédentes,
**caractérisée en ce que** l'au moins un élément d'étanchéité électriquement conducteur et élastiquement déformable (D) comprend au moins un matériau choisi dans le groupe constitué de polymères conducteurs, caoutchouc conducteur ou élastomères non conducteurs, élastomères thermoplastiques, néoprène, caoutchoucs de silicone, mastics de silicone, poly(chlorure de vinyle) et EPDM, et est éventuellement recouvert d'une couche contenant de l'aluminium, du tissu conducteur, de l'argent, du nickel, du graphite ou d'autres matériaux conducteurs à base de carbone, ou parsemé de particules d'aluminium, d'argent, de cuivre, de nickel, de graphite, de carbone ou d'autres particules conductrices de l'électricité.

8. Procédé de traitement au plasma, comprenant le soudage à l'arc et/ou la découpe et/ou la pulvérisation, **caractérisé en ce qu'**une torche, selon l'une quelconque des revendications 1 à 7, est utilisée.

9. Procédé selon la revendication 8, **caractérisé en ce qu'**il comprend une étape consistant à vérifier la connexion étanche des au moins deux composants connectés en mesurant la conductivité électrique entre les au moins deux composants connectés..

10. Procédé selon la revendication 8, **caractérisé en ce qu'**il comprend une étape consistant à vérifier la connexion électriquement conductrice des au moins deux composants connectés par la détection d'une fuite de fluide.
